# EUROPEAN PATENT SPECIFICATION

(11) **EP 2 218 934 B1**
(45) Date of publication and mention of the grant of the patent: **06.05.2015**
(21) Application number: 10152757.0
(22) Date of filing: 05.02.2010
(51) Int. Cl.: F16F 1/373

(54) **Vibration damping device and method for evaluating the performances of said device**
Vibrationsdämpfungsvorrichtung und Verfahren zur Beurteilung der Leistungen der besagten Vorrichtung
Dispositif d'amortissement des vibrations et procédé pour évaluer les performances dudit dispositif

(30) Priority: 12.02.2009 IT RM20090061
(43) Date of publication of application: 18.08.2010
(73) Proprietor: Strago Ricerche S.r.l., 80078 Pozzuoli (NA) (IT)
(72) Inventor: Mannara, Giovanni, 80078 Pozzuoli (Napoli) (IT)
(74) Representative: Carangelo, Pierluigi

(56) References cited:
- WO-A-2007/127132
- DE-C1- 10 052 248
- US-A- 4 799 381
- US-A- 5 000 415

## Description

The present invention refers to a vibration attenuation device and to a method for evaluating the performance of said device.

It is known that vibration attenuation devices are subjected to a progressive performance deterioration phenomenon in terms of capacity to absorb vibrations during use thereof. Currently, it is not always possible to efficiently evaluate and monitor the state of deterioration of such devices.

For example, in the railway industry the problem regarding reduction of vibrations, and the noise associated thereto, has raised more and more concern over the last decades, given that, over such period of time, the urban areas have incorporated, and they are bound to incorporate more and more, the railway tracks and station and there is an ever-growing number of urban lines, whose passage especially but not exclusively involves the underground of the large and medium-sized cities. In order to reduce vibrations and noise in the surrounding environment there has been an ever-growing use of vibration attenuation mats, called antivibration mats, arranging such mats beneath the tracks along the railway lines, especially in particularly sensitive urban areas. During use, such mats are subjected to the deterioration of the material they are made of over time and, thus, of the performance efficiency which also depends on the climatic and operational conditions, which is however evaluated by empirically measuring the vibration levels in the environments close to the railway line. However, such measurement is not accurate due to the fact that it is strongly related to the characteristics of the source of vibrations.

The same problem arises and generally occurs in applications different from the railway transport industry. For example, even insulators for electromechanical machines - for example of the industrial type - are subjected to deterioration that is difficult to evaluate. Such insulators may for example be made of elastomers, rubber and metal or metal links.

Document WO 2007/127132 describes a sensor interface comprising a flexible substrate positionable between two objects of interest and integrated within which are sensors of various types for measuring physical parameters such as temperature, velocity, acceleration. It is however deemed that the described interface does not allow measuring the deterioration of the attenuation properties of the flexible substrate because the parameters measured by the sensors strongly depend on the characteristics of the relative motion between the two objects, in other words on the dynamic stresses to which the substrate is subjected.

The object of the present invention is that of providing a vibration attenuation device capable of overcoming the abovementioned drawbacks with reference to the prior art.

Such object is attained by means of a vibration attenuation device as generally defined in the attached first claim in its most general embodiment and in the dependent claims in some particular embodiments.

A further object of the present invention is that of providing a method for evaluating the performance of a vibration attenuation device as generally described in claim 12.

Now, the invention shall be clear from the following detailed description of a preferred embodiment thereof, strictly provided for exemplifying and non-limiting purposes related to the attached drawings, wherein:
- figure 1 schematically shows a cross-sectional view of a vibration attenuation device according to a first embodiment of the present invention, wherein such device is installed beneath an installation for transport on tracks between the crosspieces and a support surface;
- figure 2 schematically shows a cross-sectional enlarged view of the vibration attenuation device of figure 1; and
- figure 3 schematically shows a lateral sectional view of a vibration attenuation device according to a second embodiment of the present invention.

In the figures, identical or similar elements are indicated using the same reference numbers.

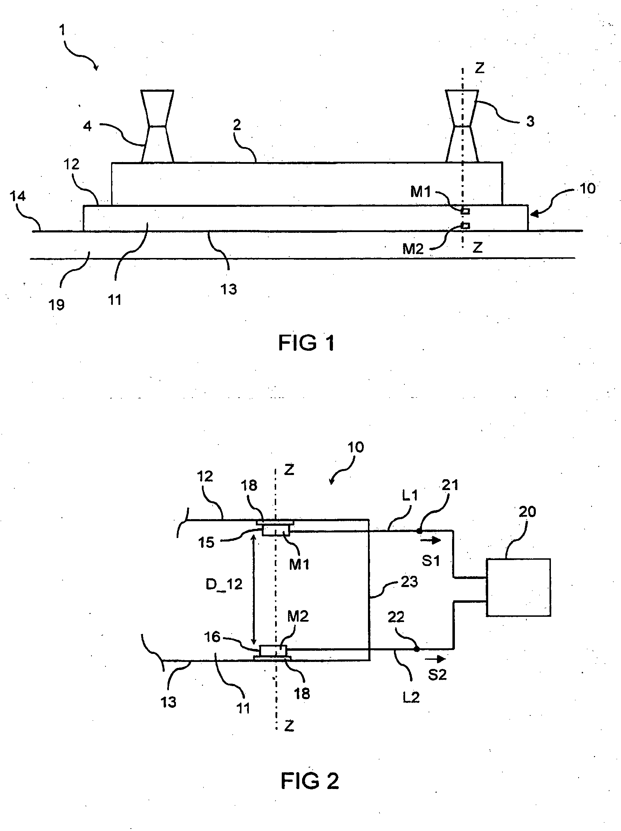

With reference to figure 1, 1 is generally used to indicate an installation for track transport, schematically represented as a cross-section in such figure, comprising a railway line 3,4, a support crosspiece 2 and a vibration attenuation device 10, which in the represented particular example is a railway antivibration mat.

In a per se known manner, the railway line 3,4 comprises a pair of tracks 3 and 4, made of metal material, and the support crosspiece 2 is made of cement or wood material. The support crosspiece 2 shown in figure 1 represents a plurality of crosspieces arranged perpendicularly with respect to the main longitudinal extension axis of the railway line 3,4.

The vibration attenuation device 10 comprises a main body 11 made of antivibration material, i.e. made of material suitable to dampen vibrations, which is defined between an upper face 12 and a lower face 13. In the preferred non-limiting embodiment represented in figure 1, the vibration attenuation device 10 is interposed between the crosspiece 2 and a support surface 14. For example the latter represents the free surface of a gravel layer 19 deposited on a seat of the installation 1 obtained on the ground.

As observable, the attenuation device 10 is thus interposed between a source of vibrations and a support surface 14 with the aim of preventing the vibrations produced by the source from being transmitted to the surrounding environment through the support surface 14 to the uttermost, for example, in practice, through the gravel layer 19. The source of vibrations is in this case directly represented by a means, such as for example a train, moving on the railway line 3,4 crossing the crosspiece 2, and indirectly represented by the railway line 3,4 and by the crosspiece 2 which vibrate upon the passage of such means.

It should be borne in mind that, generally, a vibration attenuation device 10 according to the present invention is intended to be directly or indirectly interposed between one source of vibrations and a support surface 14, in such a manner that the upper face 12 of the main body 11 is directed towards the source of vibrations and the lower face 13 of said body 11 is directed towards the support surface 14.

As mentioned previously, in the particular embodiment represented in figures 1 and 2, the vibration attenuation device 10 is represented by an antivibration mat for railway installations. In this case, the main body 11 of the antivibration mat 10 is preferably made of composite material comprising: fibres, rubber granules and polyurethane bonding material. For example, the main body 11 has a thickness comprised in the range between 3-9 cm, for example equivalent to about 7 cm, a width at least equivalent to the distance between the two tracks 3,4 (for example, comprised between 1 and 2 metres). Regarding the length, a mat of the type described above may be convenient, and in a non-limiting manner, obtained as sections of strips of a given length in such a manner that the face 14 of the mat may serve as a support surface for a plurality of crosspieces 2.

Hereinafter, for the sake of simplifying the description, reference shall be made to an attenuation device 10 in the form of an antivibration mat of the type described above and having a thickness of about 8 cm, without including any limitation.

With reference to figures 1 and 2, the antivibration mat 10 comprises at least a first M1 and a second M2 vibration sensors, suitable to provide in output respectively a first S1 and a second signal S2 bearing information related to the vibrations detected by the sensors M1, M2. The sensors M1, M2 are arranged spaced from each other and accommodated in the thickness of the main body 11 between the upper face 12 and the lower face 13. For example, the sensors M1 and M2 are positioned therebetween at a distance D_12 equivalent to about 6 cm in opposite seats or pockets 15, 16 obtained in the mat 10 and for example having a depth of about 1-2 cm. The seats 15, 16 preferably have an open side closed by a respective plate 18, for example obtained using the same material as the mat 10 or using other materials, for example metal. Conveniently, the sensors M1, M2 are fixed to the mat 10 in the respective seats 15, 16 in such a manner to be integral with the main body 11 of the mat 10 and in particular integral with the two opposite faces of the separation layer D_12.

As clearly observable in figure 1, the sensors M1, M2 are arranged at different heights in the thickness of the main body, aligned vertically and spaced from each other by a layer of said material (thickness layer D_12) in such a manner that correlating the information of the first and second signal to each other it is possible to have an indication of the degree of degradation of the antivibration properties of said layer and thus of the attenuation device.

According to an embodiment, for example such as the one indicated in figures 1 and 2, the faces 12, 13 of the main body 11 are substantially flat and the sensors M1, M2 are aligned to each other along an alignment direction Z-Z substantially perpendicular to such faces 12, 13. In the example represented in figures 1 and 2, the sensors M1, M2 lie aligned beneath a track 3 of the railway line 3,4. Generally, the pair of sensors M1, M2 may however be positioned at any other vertical position of the mat.

A further pair of sensors, not represented in the figures, may also be provided for beneath the other track 4.

According to an embodiment, such as the one represented in figures 1 and 2, the sensors M1, M2 may be arranged in the thickness of the main body 11 of the mat 10 substantially in proximity of the upper face 12 and lower face 13, respectively, of such body 11.

In a currently preferred embodiment, the mat 10 further comprises conductive connection means L1, L2 at least partly accommodated in the main body 11, electrically connected to the sensors M1, M2 and suitable to make the signals S1, S2 available outside main body 11. For example provided for may be two multipolar cables L1, L2, which pass through a lateral wall 23 of the main body 11 possibly provided with respective connectors 21, 22 outside the main body 11 of the mat. In a variant embodiment not shown in the figures, the connectors 21, 22 are at least partly inside the main body 11 and arranged flush with respect to the lateral wall 23. Possibly, for sake of convenience, the two connectors 21, 22, both in the case wherein the latter are outside the main body 11 and the case wherein they are at least partly inside the latter, they may be replaced by a single connector. In an alternative embodiment, the two sensors M1, M2 may be provided with a source of power supply inside the mat 11, hence a wireless communication interface may be provided for to replace conductive means L1, L2.

In a particularly preferred embodiment, the antivibration mat 10 further comprises a processing unit 20 outside the main body 11 and connectable (removably or permanently) to the sensors M1, M2 to receive and process signals S1, S2 in such a manner to extract a parameter related to an attenuation of power or amplitude between said signals in one or more portions of frequency spectrum of such signals, in order to monitor the performance and degree of deterioration of the antivibration mat 10 in terms of capacity to attenuate the vibrations.

In a currently preferred embodiment, the sensors M1, M2 are acceleration sensors. More preferably, each of such sensors M1, M2 comprises a MEMS transducer. For example, such MEMS transducer is an integrated circuit and the sensors M1, M2 comprise a printed circuit board (having for example an area of 1-2cm²) on which said integrated circuit is mounted together with other circuit components for example suitable to interface the integrated circuit with a processing unit 20 through the conductive means L1, L2. Preferably the MEMS transducers are capable of detecting accelerations along three orthogonal axes.

In the case wherein the sensors M1, M2 are acceleration sensors, the processing unit 20 is such to calculate a ratio between an acceleration detected (or a quantity related to such acceleration) by one of said sensors and an acceleration detected (or a quantity related to such acceleration) by the other of said sensors, said accelerations being detected substantially simultaneously, i.e. exactly simultaneously or approximately simultaneously to possibly take into account the propagation delay of the vibration wave between the first and the second sensor.

In a preferable but non-limiting manner, such ratio is calculated between an acceleration component detected by each of said sensors along an alignment axis Z-Z of said sensors M1, M2. It should be observed that it is however possible to take into account other acceleration components, possibly by weighing the various components differently.

Now, following is a brief description of a method for evaluating the performance and the deterioration of an attenuation device 10 of the type described above. In the particular case of an antivibration mat, it may be provided for that such method be executed periodically to monitor at more or less regular intervals the degree of deterioration of such mat and in such a manner to programme prompt replacement interventions in case of detection of performance classifiable as inadequate. Furthermore, it should be observed that in the specific case of an antivibration mat for railway installations, it is not necessary to provide for that pairs of sensors M1, M2 be provided at each crosspiece, for example it being possible to provide for pairs of sensors only at some crosspieces, for example at intervals of 10-20 m. it is also possible to insert the sensors in such a manner that two pairs of consecutive sensors (in the longitudinal direction of extension of the railway line) are arranged one beneath the track 3 and the other beneath the track 4.

The evaluation method comprises the steps of:
- establishing an operational connection between a processing unit 20 and the sensors M1,M2;
- exerting pressure through a source of vibrations on the attenuation device 10;
- receiving the first S1 and the second S2 signal at the processing unit 20;
- processing at the processing unit 20 the first S1 and the second S2 signal received to compare - with respect to each other - the values related to the amplitude or to the power of said signals S1,S2 in at least one portion of spectrum of said signals, to estimate a parameter related to the attenuation between the vibrations detected respectively by the first and the second sensor.

Preferably the abovementioned processing step comprises an operation of selecting at least one portion of spectrum of the first signal S1 where a greater signal power is detected to compare - with respect to each other - the values related to the amplitude or to the power of said signals S1, S2 in such portion of spectrum. More preferably, the selection operation is such to select at least two of said portions of spectrum and the estimation of the abovementioned parameter is carried out by assigning different weight to said two portions according to the power detected in said portions.

According to an embodiment, the sensors M1, M2 are acceleration sensors and the signals S1, S2 are signals bearing information on three acceleration components detected by said sensors along respective axes orthogonal with respect to each other, the abovementioned parameter being estimated according to a ratio or comparison between acceleration components detected by said sensors along an alignment axis Z-Z of the sensors S1,S2.

Thus, the description above allows understanding how an attenuation device of the type described above fully attains the preset objectives.

As a matter of fact, in the specific case of a railway antivibration mat, experimental tests obtained using tools capable of simulating the vibrations and the load of a railway means have shown that the attenuation measured through the signals provided by the sensors is substantially independent from the load and substantially depends on the stress frequency.

Obviously, the attenuation device of the type described above may be subjected to numerous modifications by a man skilled in the art with the aim of meeting required and specific needs, all falling within the scope of protection of the invention, as defined by the following claims.

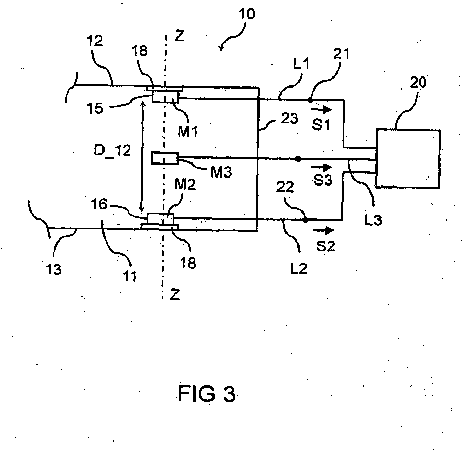

For example, it should be observed that the attenuation device could be a device different from an antivibration mat, for example being represented by an insulator for electromechanical machines, for example made of elastomers, rubber and metal or metal links. Furthermore, it should be observed that with the aim of having a more precise indication of the degree of deterioration of the attenuation device it is possible to provide for more than two sensors in the thickness of the main body aligned along a predetermined alignment direction. For such purpose, represented in the example of figure 3 is a device entirely similar to the one described with reference to figures 1 2, wherein further provided for is an intermediate sensor M3 suitable to make a signal S3 available on line L3. In this case it is possible to evaluate the state of deterioration of the device comparing - with respect to each other - three signals S1,S2,S3 provided in output by the respective sensors M1,M2,M3.

## Claims

1. Vibration attenuation device (10) comprising:
- a main body (11) made of anti-vibration material, said main body (11) being defined between an upper face (12) and a lower face (13), the device (10) being provided for direct or indirect interposition between a vibration source and a support surface (14), so that said upper face (12) is directed towards the vibration source and said lower face (13) is directed towards said support surface (14);
- at least a first (M1) and second (M2) vibration sensor, for outputting a first (S1) and second signal (S2), respectively, carrying information related to vibrations measured by said sensors (M1, M2), said sensors (M1, M2) being housed within the thickness of said main body (11) between said upper face (12) and lower face (13);
**characterized in that**
said sensors (M1,M2) are spaced apart at different heights in the thickness of said main body (11), in a vertical alignment and spaced apart each other by a separation layer of said material, so that correlating information carried by said first and second signals it is possible to obtain an indication of the degradation status of the vibration damping properties of said separation layer and therefore of said attenuation device.

2. Vibration attenuation device (10) according to claim 1, wherein said faces (12, 13) are generally plane and wherein the sensors (M1, M2) are aligned to each other along an alignment direction (Z-Z) which is generally perpendicular to said faces (12, 13) and are fixed to two opposite faces of said separation layer.

3. Vibration attenuation device (10) according to any one of preceding claims, wherein the sensors (M1, M2) are positioned within the thickness of said main body (11), in general proximity to said upper face (12) and lower face (13).

4. Vibration attenuation device (10) according to any one of preceding claims, wherein the sensors (M1, M2) are acceleration sensors.

5. Vibration attenuation device (10) according to any one of preceding claims, wherein the sensors (M1, M2) comprise a MEMS transducer.

6. Vibration attenuation device (10) according to any one of the preceding claims, further comprising conductive connection means (L1, L2), which are at least partially housed within said main body (11), electrically connected to said sensors (M1, M2) and such as to provide said signals (S1, S2) on the outside of said main body (11).

7. Vibration attenuation device (10) according to claim 6, wherein said device is an anti-vibration mat.

8. Vibration attenuation device (10) according to claim 7, wherein said main body (11) is made of a material comprising: fibers, gum granules and polyurethane binding material.

9. Vibration attenuation device (10) according to claims 7 or 8, wherein the mat is provided for attenuating vibrations generated by railway transport systems (1) and wherein said mat is to be positioned directly or indirectly underneath a track (3, 4), so that said sensors (M1, M2) are aligned underneath a rail of said track (3, 4).

10. Vibration attenuation device (10) according to any one of claims 1 to 6, wherein said device is an insulator for electro-mechanical machines, in particular of the industrial type.

11. Vibration attenuation device (10) according to any one of the preceding claims, further comprising a processing unit (20), positioned outside said main body (11), which is connectable to sensors (M1, M2) for receiving said signals and processing said signals (S1, S2) in order to extract a parameter related to a power or amplitude attenuation among said signals in one or more portions of the frequency spectrum of said signals, in order to monitor the performance and degradation condition of said device (10), with respect to vibration attenuation capacity.

12. Method for evaluating the performance and degradation of an attenuation device (10) according to any one of the preceding claims, comprising the steps of:
- establishing an operative connection between a processing unit (20) and said sensors (M1, M2);
- acting upon said attenuation device (10) by means of the vibration source;
- receiving said first (S1) and second (S2) signal at said processing unit (20);
- processing said first (S1) and second (S2) signal in order to perform the comparison between values related to amplitude or power output of said signals (S1, S2) in at least a portion of the spectrum of said signals, in order to estimate a parameter related to the attenuation between the vibrations measured by said first and second sensor, respectively.

13. Method according to claim 12, wherein the processing step comprises a step of selecting at least a portion of the spectrum of said first signal (S1), in which a higher signal power output is measured, in order to perform said comparison in said spectrum portion.

14. Method according to claim 13, wherein the selecting step is such as to select at least two of said spectrum portions and wherein said estimate is performed by assigning a different weight to said two portions, based on the power measured in said portions.

15. Method according to any one of claims 12 to 14, wherein the sensors (M1, M2) are acceleration sensors and wherein said signals (S1, S2) are signals carrying information about three acceleration components measured by said sensors (M1, M2), said parameter being related to a ratio between the acceleration components measured by said sensors along an alignment axis (Z-Z) of said sensors (M1, M2).

## Patentansprüche

1. Vibrationsdämpfungsvorrichtung (10) umfassend:
- einen aus Anti-Vibrationsmaterial hergestellten Hauptkörper (11), wobei der Hauptkörper (11) zwischen einer oberen Seite (12) und einer unteren Seite (13) definiert ist, wobei die Vorrichtung (10) zur direkten oder indirekten Einfügung zwischen einer Vibrationsquelle und einer Halterungsfläche (14) vorgesehen ist, so dass die obere Seite (12) in Richtung der Vibrationsquelle gerichtet ist und die untere Seite (13) in Richtung der Halterungsfläche (14) gerichtet ist;
- wenigstens einen ersten (M1) und zweiten (M2) Vibrationssensor zum Ausgeben eines ersten (S1) beziehungsweise zweiten Signals (S2), welche Informationen bezüglich durch die Sensoren (M1, M2) gemessener Vibrationen tragen, wobei die Sensoren (M1, M2) innerhalb der Dicke des Hauptkörpers (11) zwischen der oberen Seite (12) und unteren Seite (13) aufgenommen sind;
**dadurch gekennzeichnet, dass**
die Sensoren (M1, M2) voneinander in unterschiedlichen Höhen in der Dicke des Hauptkörpers (11) beabstandet sind, wobei sie durch eine Trennschicht des Materials in einer vertikalen Ausrichtung und voneinander beabstandet sind, so dass, indem durch die ersten und zweiten Signale getragene Informationen korreliert werden, es möglich ist, eine Anzeige des Schwächungsstatus der Vibrationsdämpfungseigenschaften der Trennschicht und daher der Dämpfungsvorrichtung zu erhalten.

2. Vibrationsdämpfungsvorrichtung (10) nach Anspruch 1, wobei die Seiten (12, 13) im Wesentlichen eben sind und wobei die Sensoren (M1, M2) zueinander entlang einer Ausrichtungsrichtung (Z-Z) ausgerichtet sind, welche im Wesentlichen senkrecht zu dem Seiten (12, 13) ist und an zwei gegensätzlichen Seiten der Trennschicht befestigt sind.

3. Vibrationsdämpfungsvorrichtung (10) nach einem der vorhergehenden Ansprüche, wobei die Sensoren (M1, M2) innerhalb der Dicke des Hauptkörpers (11), im Wesentlichen nahe zu der oberen Seite (12) und unteren Seite (13), positioniert sind.

4. Vibrationsdämpfungsvorrichtung (10) nach einem der vorhergehenden Ansprüche, wobei die Sensoren (M1, M2) Beschleunigungssensoren sind.

5. Vibrationsdämpfungsvorrichtung (10) nach einem der vorhergehenden Ansprüche, wobei die Sensoren (M1, M2) einen MEMS-Geber umfassen.

6. Vibrationsdämpfungsvorrichtung (10) nach einem der vorhergehenden Ansprüche, ferner umfassend leitfähige Verbindungsmittel (L1, L2), welche wenigstens teilweise innerhalb des Hauptkörpers (11) aufgenommen sind, wobei sie elektrisch mit den Sensoren (M1, M2) verbunden sind und zwar derart, dass sie die Signale (S1, S2) an der Außenseite des Hauptkörpers (11) bereitstellen.

7. Vibrationsdämpfungsvorrichtung (10) nach Anspruch 6, wobei die Vorrichtung eine Anti-Vibrationsmatte ist.

8. Vibrationsdämpfungsvorrichtung (10) nach Anspruch 7, wobei der Hauptkörper (11) aus einem Material hergestellt ist, umfassend: Fasern, Gummigranulat und Polyurethane-Bindungsmaterial.

9. Vibrationsdämpfungsvorrichtung (10) nach Ansprüchen 7 oder 8, wobei die Matte zur Dämpfung von Vibrationen vorgesehen ist, welche durch Schienentransportsysteme (1) erzeugt werden und wobei die Matte direkt oder indirekt unter einem Gleis (3, 4) positionierbar ist, so dass die Sensoren (M1, M2) unter einer Schiene des Gleises (3, 4) ausgerichtet sind.

10. Vibrationsdämpfungsvorrichtung (10) nach einem der Ansprüche 1 bis 6, wobei die Vorrichtung ein Isolator für elektro-mechanische Maschinen, insbesondere des Industrietyps, ist.

11. Vibrationsdämpfungsvorrichtung (10) nach einem der vorhergehenden Ansprüche, ferner umfassend eine außerhalb des Hauptkörpers (11) positionierte Verarbeitungseinheit (20), welche mit Sensoren (M1, M2) zum Empfangen der Signale und Verarbeiten der Signale (S1, S2) verbindbar ist, um einen Parameter zu extrahieren, welcher sich auf eine Stärken- oder Amplitudendämpfung unter den Signalen in einem oder mehreren Abschnitten des Frequenzspektrums der Signale bezieht, um den Leistungs- und Schwächungszustand der Vorrichtung (10), mit Bezug auf die Vibrationsdämpfungskapazität, zu überwachen.

12. Verfahren zur Beurteilung der Leistung und Schwächung einer Dämpfungsvorrichtung (10) nach einem der vorhergehenden Ansprüche, umfassend die Schritte:
- Herstellen einer operativen Verbindung zwischen einer Verarbeitungseinheit (20) und den Sensoren (M1, M2);
- Einwirken auf die Dämpfungsvorrichtung (10) mittels der Vibrationsquelle;
- Empfangen des ersten (S1) und zweiten (S2) Signals an der Verarbeitungseinheit (20);
- Verarbeiten des ersten (S1) und zweiten (S2) Signals, um den Vergleich zwischen Werten durchzuführen, welche sich auf eine Amplituden- oder Stärkenausgabe der Signale (S1, S2) in wenigstens einem Abschnitt des Spektrums der Signale beziehen, um einen Parameter zu schätzen, welcher sich auf die Dämpfung zwischen den durch den ersten beziehungsweise zweiten Sensor gemessenen Vibrationen bezieht.

13. Verfahren nach Anspruch 12, wobei der Verarbeitungsschritt einen Schritt eines Auswählens wenigstens eines Abschnitts des Spektrums des ersten Signals (S1) umfasst, in welchem eine höhere Signalstärkenausgabe gemessen wird, um den Vergleich in dem Spektrumsabschnitt durchzuführen.

14. Verfahren nach Anspruch 13, wobei der Auswahlschritt derart ist, dass wenigstens zwei der Spektrumsabschnitte ausgewählt werden und wobei das Schätzen durch Zuweisen eines unterschiedlichen Gewichts zu den beiden Abschnitten, auf Grundlage der in den Abschnitten gemessenen Stärke, durchgeführt wird.

15. Verfahren nach einem der Ansprüche 12 bis 14, wobei die Sensoren (M1, M2) Beschleunigungssensoren sind und wobei die Signale (S1, S2) Signale sind, welche Informationen über drei durch die Sensoren (M1, M2) gemessenen Beschleunigungskomponenten tragen, wobei sich der Parameter auf ein Verhältnis zwischen den durch die Sensoren entlang einer Ausrichtungsachse (Z-Z) der Sensoren (M1, M2) gemessenen Beschleunigungskomponenten bezieht.

## Revendications

1. Dispositif d'atténuation de vibrations (10) comprenant :
- un corps principal (11) réalisé en un matériau antivibratoire, ledit corps principal (11) étant défini entre une face supérieure (12) et une face inférieure (13), le dispositif (10) étant prévu pour une interposition directe ou indirecte entre une source de vibration et une surface de support (14), de sorte que ladite face supérieure (12) soit dirigée vers la source de vibration et que ladite face inférieure (13) soit dirigée vers ladite surface de support (14) ;
- au moins des premier (M1) et deuxième (M2) capteurs de vibrations, pour délivrer en sortie des premier (S1) et deuxième (S2) signaux, respectivement, portant des informations relatives à des vibrations mesurées par lesdits capteurs (M1, M2), lesdits capteurs (M1, M2) étant reçus dans l'épaisseur dudit corps principal (11) entre lesdites face supérieure (12) et face inférieure (13) ;
**caractérisé en ce que** :
lesdits capteurs (M1, M2) sont espacés l'un de l'autre à des hauteurs différentes dans l'épaisseur dudit corps principal (11), dans un alignement vertical et espacés l'un de l'autre par une couche de séparation dudit matériau, de sorte qu'une corrélation des informations portées par lesdits premier et deuxièmes signaux soit possible pour obtenir une indication de l'état de dégradation des propriétés d'amortissement des vibrations dudit couche de séparation et, par conséquent, dudit dispositif d'atténuation.

2. Dispositif d'atténuation de vibrations (10) selon la revendication 1, dans lequel lesdites faces (12, 13) sont globalement planes et dans lequel les capteurs (M1, M2) sont alignés l'un par rapport à l'autre le long d'une direction d'alignement (Z-Z) qui est globalement perpendiculaire auxdites faces (12, 13) et sont fixés à deux faces opposées de ladite couche de séparation.

3. Dispositif d'atténuation de vibrations (10) selon l'une quelconque des revendications précédentes, dans lequel les capteurs (M1, M2) sont positionnés dans l'épaisseur dudit corps principal (11), globalement à proximité desdites face supérieure (12) et face inférieure (13).

4. Dispositif d'atténuation de vibrations (10) selon l'une quelconque des revendications précédentes, dans lequel les capteurs (M1, M2) sont des capteurs d'accélération.

5. Dispositif d'atténuation de vibrations (10) selon l'une quelconque des revendications précédentes, dans lequel les capteurs (M1, M2) comprennent un transducteur MEMS.

6. Dispositif d'atténuation de vibrations (10) selon l'une quelconque des revendications précédentes, comprenant en outre des moyens de connexion conducteurs (L1, L2), qui sont au moins partiellement reçus dans ledit corps principal (11), électriquement connectés auxdits capteurs (M1, M2) et tels qu'ils fournissent lesdits signaux (S1, S2) à l'extérieur dudit corps principal (11).

7. Dispositif d'atténuation de vibrations (10) selon la revendication 6, ledit dispositif étant un tapis antivibratoire.

8. Dispositif d'atténuation de vibrations (10) selon la revendication 7, dans lequel ledit corps principal (11) est réalisé en un matériau comprenant : des fibres, des granules de gomme et un matériau liant à base de polyuréthane.

9. Dispositif d'atténuation de vibrations (10) selon la revendication 7 ou 8, le tapis étant prévu pour atténuer des vibrations générées par des systèmes de transport ferroviaire (1) et ledit tapis devant être positionné directement ou indirectement en-dessous d'une voie (3, 4), de sorte que lesdits capteurs (M1, M2) soient alignés en-dessous d'un rail de ladite voie.

10. Dispositif d'atténuation de vibrations (10) selon l'une quelconque des revendications 1 à 6, ledit dispositif étant un isolant pour des machines électromécaniques, en particulier du type industriel.

11. Dispositif d'atténuation de vibrations (10) selon l'une quelconque des revendications précédentes, comprenant en outre une unité de traitement (20), positionnée à l'extérieur dudit corps principal (11), qui peut être connectée à des capteurs (M1, M2) pour recevoir lesdits signaux et traiter lesdits signaux (S1, S2) afin d'extraire un paramètre relatif à une atténuation de puissance ou d'amplitude parmi lesdits signaux dans une ou plusieurs parties du spectre de fréquence desdits signaux, dans le but de surveiller la performance et l'état de dégradation dudit dispositif (10), par rapport à la capacité d'atténuation des vibrations.

12. Procédé d'évaluation de la performance et de la dégradation d'un dispositif d'atténuation (10) selon l'une quelconque des revendications précédentes, comprenant les étapes qui consistent :
- à établir une connexion fonctionnelle entre une unité de traitement (20) et lesdits capteurs (M1, M2) ;
- à agir sur ledit dispositif d'atténuation (10) au moyen de la source de vibrations ;
- à recevoir lesdits premier (S1) et deuxième (S2) signaux au niveau de ladite unité de traitement (20) ;
- à traiter lesdits premier (S1) et deuxième (S2) signaux afin d'effectuer la comparaison entre des valeurs relatives à une sortie d'amplitude ou de puissance desdits signaux (S1, S2) dans au moins une partie du spectre desdits signaux, dans le but d'estimer un paramètre relatif à l'atténuation entre les vibrations mesurées par lesdits premier et deuxième capteurs, respectivement.

13. Procédé selon la revendication 12, dans lequel l'étape de traitement comprend une étape qui consiste à sélectionner au moins une partie du spectre dudit premier signal (S1), une sortie de puissance de signal plus élevée étant mesurée, afin d'effectuer ladite comparaison dans ladite partie du spectre.

14. Procédé selon la revendication 13, dans lequel l'étape de sélection est telle qu'elle sélectionne au moins deux desdites parties de spectre et dans lequel ladite estimation est effectuée en attribuant un poids différent auxdites deux parties, sur la base de la puissance mesurée dans lesdites parties.

15. Procédé selon l'une quelconque des revendications 12 à 14, dans lequel les capteurs (M1, M2) sont des capteurs d'accélération et dans lequel lesdits signaux (S1, S2) sont des signaux portant des informations concernant trois composantes d'accélération mesurées par lesdits capteurs (M1, M2), ledit paramètre étant relatif à un rapport entre les composantes d'accélération mesurées par lesdits capteurs le long d'un axe d'alignement (Z-Z) desdits capteurs (M1, M2).
